# EUROPÄISCHE PATENTSCHRIFT

(11) **EP 1 798 376 B1**
(45) Veröffentlichungstag und Bekanntmachung des Hinweises auf die Patenterteilung: **05.04.2017**
(21) Anmeldenummer: 06024319.3
(22) Anmeldetag: 23.11.2006
(51) Int. Cl.: F01D 5/14, B23H 3/04, B23H 9/10

(54) **Sekundärfluidkanalherstellungsverfahren**
Method for manufacturing of a secondary flow channel
Méthode pour la fabrication d'un canal pour un flux secondaire

(30) Priorität: 19.12.2005 DE 102005060698
(43) Veröffentlichungstag der Anmeldung: 20.06.2007
(73) Patentinhaber: Rolls-Royce Deutschland Ltd & Co KG, 15827 Blankenfelde-Mahlow (DE)
(72) Erfinder: Gümmer, Volker, 85391 Allershausen (DE); Scholz, Andreas, 12529 Schönefeld (DE)
(74) Vertreter: Hoefer & Partner Patentanwälte mbB

(56) Entgegenhaltungen:
- EP-A2- 1 286 020
- DE-A1- 4 428 207
- GB-A- 1 516 014
- US-A1- 2003 086 785
- US-A1- 2005 133 378
- US-B1- 6 234 752

## Beschreibung

Die Erfindung betrifft Bauteile von Gegenständen, Anlagen oder Maschinen, die statisch oder dynamisch mit einem Fluid in Berührung kommen. Im Besonderen betrifft sie durchströmte oder umströmte Bauteile von Strömungsmaschinen sowie die zur Hin- und Ableitung des Arbeitsmediums (Fluids) notwendigen Komponenten. Die Erfindung umfasst die Kombination aus Hauptmerkmalen der konstruktiven Gestaltung von Öffnungen in besagten Bauteilen sowie die Anwendung moderner Fertigungsverfahren zur Realisierung derselben.

Die aerodynamische Effizienz von Strömungsmaschinen und Strömungskomponenten wird durch das Wachstum und die Ablösung von Grenzschichten bestimmt, die sich entlang der benetzten Oberflächen des Strömungspfades ausbilden.

In Strömungsmaschinen sind davon die Oberflächen der Beschaufelung und die Oberflächen aller Naben- und Gehäusebauteile betroffen. Die Grenzschichten können durch die Entnahme oder durch die Zufuhr von Fluid an aerodynamisch kritischen Orten günstig beeinflusst werden. Die Fluidentnahme oder Fluidzufuhr erfordert Öffnungen in den von der Hauptströmung benetzten Oberflächen der Schaufel und/oder der Naben- und Gehäusewandungen. Diese Öffnungen, im weiteren Text als "Sekundärfluidkanal SFK" bezeichnet, stellen üblicherweise die Verbindung zu einer mit kleinen Sekundärfluidmengen durchströmten Kammer her, die innerhalb der hohl gestalteten Schaufel oder innerhalb der Nabe oder des Gehäuses vorgesehen ist. Öffnungen, die eine dem Stand der Technik entsprechende einfache Form besitzen und nach dem Stand der Technik fertigbar sind, arbeiten ungenau, mit zu hohen Sekundärfluidmengen und deshalb nicht hinreichend effektiv.

Besagte SFK müssen, um eine hohe Effektivität zu erreichen, eine komplizierte geometrische Form mit hohen Genauigkeitsanforderungen annehmen, die mit üblichen spanenden oder formgebenden Bearbeitungsverfahren nach dem Stand der Technik gar nicht oder nur bedingt herstellbar sind. Dies ist zum Beispiel dann der Fall, wenn ein SFK dazu dienen soll, der Hauptströmung zur Stabilisierung der zugehörigen Grenzschicht Sekundärfluid präzise zuzuführen und dieses dicht an der betroffenen Oberfläche entlang zu leiten.

Als nachteilig erweist sich beim Stand der Technik, dass Öffnungen in Bauteilen von Gegenständen, Anlagen oder Maschinen mit komplizierter Formgebung, Orientierung und Konturgenauigkeit, nicht mit üblichen spanenden Fertigungsverfahren herstellbar sind. Dies ist insbesondere dann der Fall, wenn die Gesamtheit der herzustellenden Konturen nicht einheitlich von einer Seite des Bauteils ausformbar ist.

Der Querschnitt eines SFK in Bauteilen von Strömungsmaschinen kann beispielsweise die Form einer gekrümmten Düse aufweisen. Ein Grund für die nach dem Stand der Technik nicht herstellbare Qualität des SFK ist seine geforderte kleine Größe und seine oftmals schräge oder gekrümmte Orientierung innerhalb des umgebenden Materials.

Aus der DE 44 28 207 A1 ist ein Herstellverfahren für eine Turbinen-Laufradscheibe mit gekrümmtem Kühlluftkanal vorbekannt. Hierzu werden teilkreisbogenförmige Elektroden zur Ausbildung der Kühlluftkanäle mittels eines elektrochemischen Erodierverfahrens verwendet. Die somit hergestellten Kanäle weisen einen runden oder elliptischen Querschnitt auf, welcher, bedingt durch die Kreisbewegung der Elektroden, einen über seine axiale Länge gleichbleibenden Querschnitt aufweisen.

Die US 2005/133378 A1 zeigt ein Verfahren zur Ausgestaltung rotationssymmetrischer Ausnehmungen mittels eines elektrochemischen Verfahrens. Die Ausnehmungen sind jeweils zu ihrer Mittelachse rotationssymmetrisch und werden durch Elektroden erzeugt, die jeweils von einer Seite aus in das Werkstück eingesenkt werden.

Der Erfindung liegt die Aufgabe zugrunde, ein Sekundärfluidkanalherstellungsverfahren der eingangs genannten Art zu schaffen, welches bei einfachem Aufbau und einfacher, betriebssicherer Anwendbarkeit die Herstellung von Sekundärfluidkanälen mit komplexer Geometrie ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Sekundärfluidkanal mittels eines elektrochemischen Erodierverfahrens erzeugt wird. Hierdurch ergibt sich, wie nachfolgend noch beschrieben werden wird, eine Möglichkeit, auch sehr komplexe Geometrien auf einfache und reproduzierbare Weise zu erzeugen.

Erfindungsgemäß ist vorgesehen, dass zumindest zwei Formelektroden verwendet werden, welche von unterschiedlichen Seiten eines mit dem Sekundärfluidkanal zu versehenden Bauteils in dieses eingebracht oder eingesenkt werden. Dabei ist es offen, ob vorab bereits eine Ausnehmung oder Öffnung entweder mittels eines Erodierverfahrens oder auf andere Weise erzeugt wurde und die Formelektroden jeweils nur dazu dienen, die geometrische Oberflächenform des Sekundärfluidkanals zu schaffen oder ob dieser aus dem Vollmaterial mittels der Formelektroden hergestellt wird.

Besonders günstig ist es, wenn die Wandung des Sekundärfluidkanals nach dem elektrochemischen Erodieren geglättet wird. Das Glätten kann bevorzugterweise durch Glattschleifen oder Super-Polishing erfolgen. Dabei ist es besonders günstig, ein Fluid zu verwenden, welches abrasive Partikel enthält.

Erfindungsgemäß wird der geforderte SFK mittels elektrochemischem Erodieren (ECM) oder dem sogenannten Präzisions-Elektrochemischen Erodieren (PECM) in die Wandung zwischen Sekundärluftsammler und Hauptströmung eingebracht. Dies ist unabhängig vom Material und der Wandstärke. Um die gewünschte Form des SFK zu erreichen, muss die Kontur auf der Sammlerseite sowie der Seite der Hauptströmung getrennt eingebracht werden. Die Kontur der beiden erforderlichen Formelektroden lässt sich auf diese Weise festlegen. Erfindungsgemäß fügen sich die getrennt erzeugten Konturabschnitte glatt zur Gesamtform des SFK zusammen.

Erfindungsgemäß kann zur weiteren Verbesserung des Stömungsverlaufes nach dem Einbringen des SFK mittels ECM oder PECM ein sogenannten Gleitschleifen, auch bekannt als Super-Polishing, durchgeführt werden. Durch die abrasive Wirkung des Fluids werden eventuell durch den Fertigungsprozess entstandene Unebenheiten weiter verringert und Kanten verrundet.

Im Folgenden wird die Erfindung anhand von Ausführungsbeispielen in Verbindung mit den Figuren beschrieben. Dabei zeigt:
- Fig. 1a: Beispiele für Sekundärfluidkanäle in Bauteilen von Strömungsmaschinen;
- Fig. 1b: Beispiele für Sekundärfluidkanäle in naben- und gehäuseseitigen Begrenzungswandungen des Strömungspfades von Strömungsmaschinen;
- Fig. 1c: Beispiele für Einsätze mit Sekundärfluidkanal in Bauteilen von Strömungsmaschinen;
- Fig. 2a: einen gekrümmten düsenförmigen Sekundärfluidkanal mit seinen Hauptdimensionen;
- Fig. 2b: einen gekrümmten düsenförmigen Sekundärfluidkanal mit seinem Formgebungskonzept.

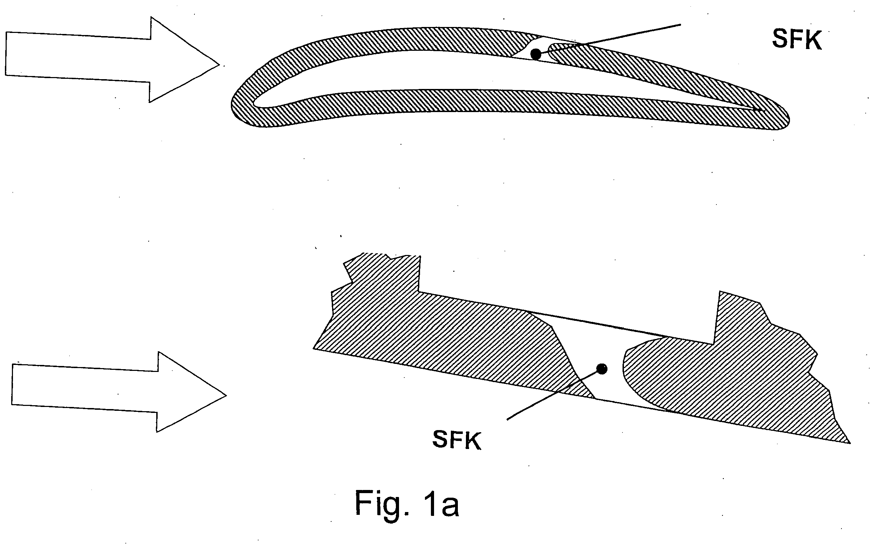

Die Fig. 1a zeigt in schematischer Darstellung zwei Beispiele für Sekundärfluidkanäle in Bauteilen von Strömungsmaschinen. Im oberen Bildteil ist eine Rotor- oder Statorschaufel im Schnitt gezeigt, die einen inneren Hohlraum besitzt und in ihrer Aussenwandung einen SKF aufweist. Selbstverständlich kann die Schaufel auch mit mehr als einem Hohlraum ausgestattet sein und weitere hier nicht dargestellte SFK besitzen. Im unteren Bildteil ist eine naben- oder gehäuseseitige Begrenzung des Strömungspfades im Schnitt gezeigt, die in ihrer Wandung einen SFK aufweist. Selbstverständlich kann die Wandung auch weitere hier nicht dargestellte SFK besitzen. Eine mögliche Richtung der umgebenden Fluidströmung wird jeweils durch einen dicken Pfeil angedeutet.

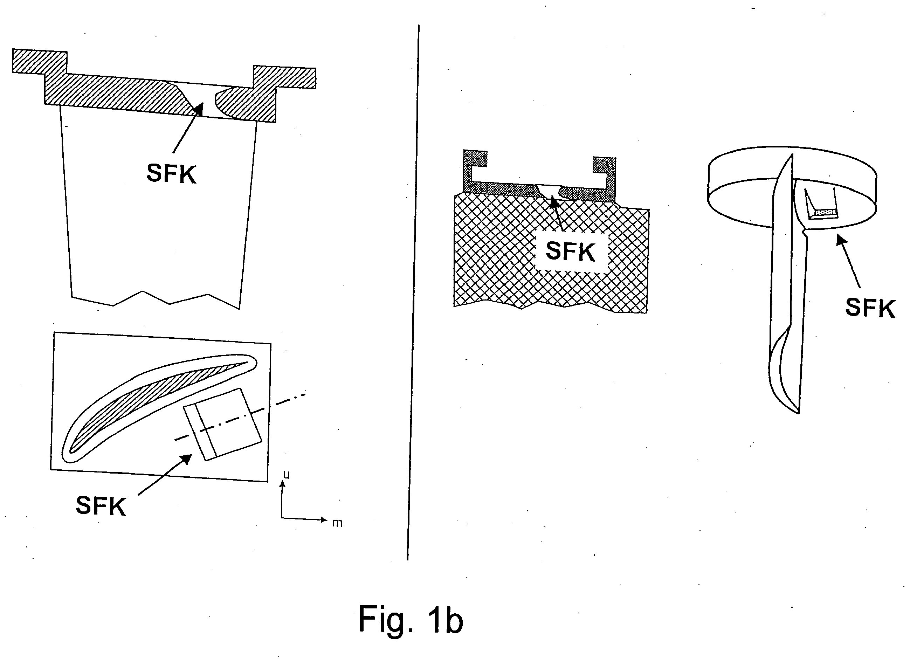

Die Fig. 1b zeigt in schematischer Darstellung zwei weitere Beispiele für Sekundärfluidkanäle in naben- und gehäuseseitigen Begrenzungswandungen des Strömungspfades in Strömungsmaschinen. In der linken Bildhälfte ist eine Schaufel mit Umfangsfuß gezeigt (oben: Seitenansicht mit Schnitt durch die Plattform; unten: Draufsicht mit Schnitt durch die Schaufel unten), in deren Plattform ein SFK, hier eine schräg zur Meridianrichtung angeordnete gekrümmte Düse neben der Schaufel innerhalb der Plattform, vorgesehen ist. In der rechten Bildhälfte ist eine Schaufel mit Drehteller und Spindel gezeigt (geschnittene und perspektivische Seitenansicht). Innerhalb des hohl ausgeführten Drehtellerkörpers ist ein SFK, auch hier wieder eine schräg angeordnete gekrümmte Düse neben der Schaufel, vorgesehen.

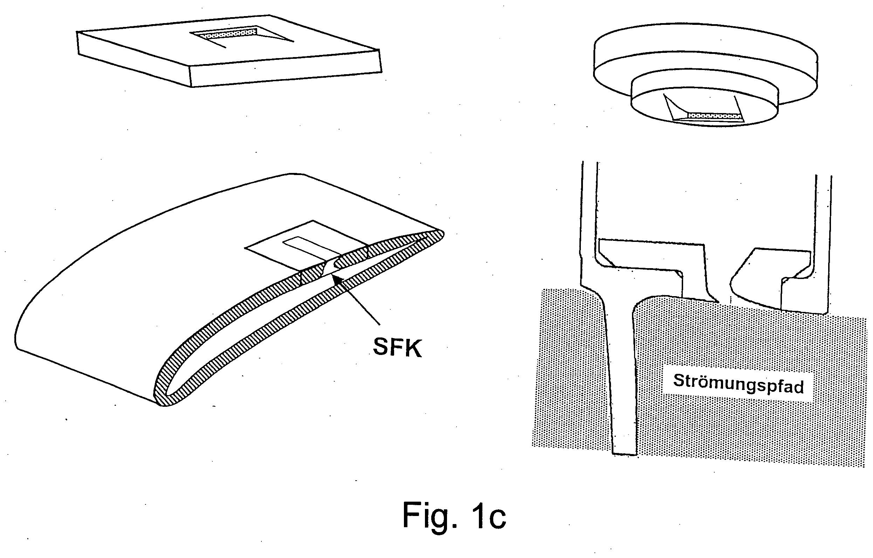

Die Fig. 1c zeigt schließlich in schematischer Darstellung Beispiele für Einsätze mit Sekundärfluidkanal in Bauteilen von Strömungsmaschinen. In der linken Bildhälfte sind perspektivisch der Abschnitt einer hohl ausgeführten Schaufel und ein separat angefertigter Einsatz gezeigt. In der rechten Bildhälfte ist ein Schnitt durch den hohl ausgeführten Fuß einer Schaufel sowie der darin Verwendung findende Einsatz gezeigt. Der Einsatz kann eine beliebige Form besitzen und mit auf beliebige Weise mit dem Rest der Schaufelstruktur verbunden werden.

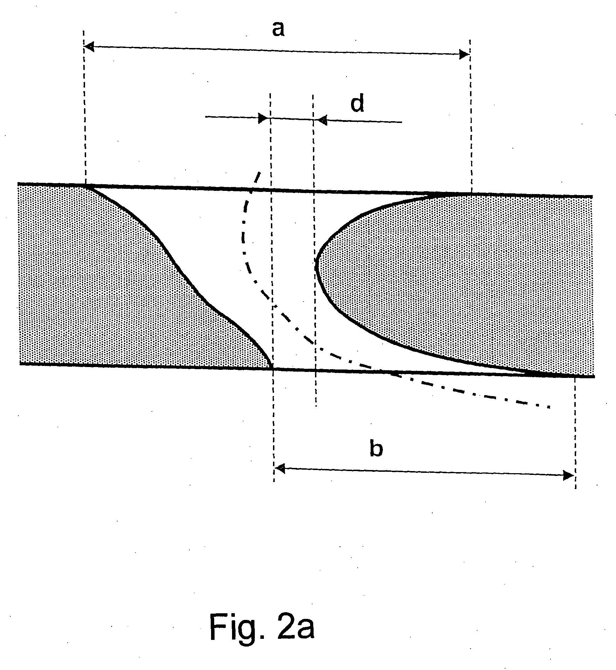

Im Spezialfall der Strömungsmaschine ist das wesentliche konstruktive Merkmal der Erfindung die Integration eines SFK in die Geometrie der Oberflächen von Beschaufelung oder Naben- und Gehäusebauteilen. Dabei ist es oftmals besonders günstig, dafür die Form einer Düse zu wählen, durch die der Sekundärluftmassenstrom geführt wird. Falls das Sekundärfluid der Hauptströmung zugeführt wird, muss es tangential zur Bauteiloberfläche eingeleitet werden. Wie die Fig. 2a zeigt, wird der etwa quer zur Hauptströmung herannahende Sekundärfluidstrom durch eine gekrümmte Düsenform beschleunigt und entsprechend der genannten Forderungen umgelenkt.

Der Konturverlauf (Hinterschnitt) sowie die geometrischen Abmessungen des SFK bei gleichzeitig hohen Anforderungen an die Oberflächenqualität machen die Verwendung von klassischen Fertigungsverfahren wie Bohren und Fräsen unmöglich. Der SFK wird durch wenige Hauptdimensionen charakterisiert. So besitzt der SFK eine innenseitige Öffnungsweite a, eine außenseitige Öffnungsweite b und eine projizierte Öffnungsweite d. Dabei sind a und b stets größer als d. Dabei kann d negativ werden, positive Beträge von d sind jedoch im Hinblick auf die Funktionalität und die Herstellbarkeit besonders vorteilhaft.

Die Dimension von a, b und d liegen oftmals im Bereich von wenigen Millimetern oder deutlich darunter. Die zu erzielende Oberflächenrauhigkeit sollte unterhalb von Ra=1,6 Mikrometer liegen.

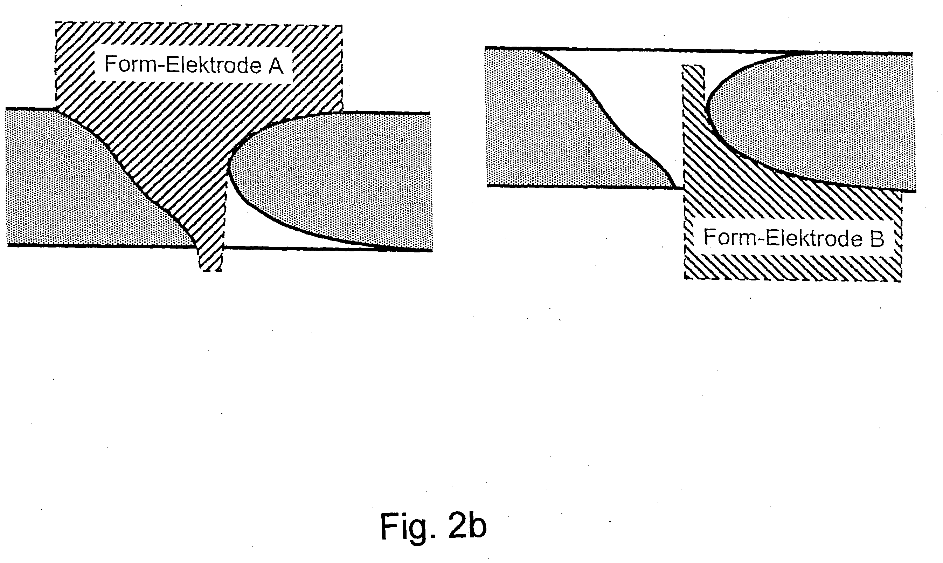

Die Fig. 2b zeigt die beiden aufeinanderfolgenden Arbeitsschritte mittels einer Formelektrode A (linke Bildhälfte der Fig. 2b) und mittels einer nachfolgend eingesetzten Formelektrode B. Die linke Bildhälfte der Fig. 2b zeigt zum besseren Verständnis den gesamten Querschnitt des zu erzeugenden Sekundärfluidkanals. Es versteht sich, dass bei einem nachfolgenden Einsatz der Formelektrode A und der Formelektrode B letztere in der in der rechten Bildhälfte von Fig. 2b gezeigten Weise arbeitet.

Erfindungsgemäß ist es auch möglich, die beiden Formelektroden so auszugestalten, dass diese gleichzeitig zum Einsatz gelangen können.

Durch die Erfindung ist es möglich, den aerodynamischen Anforderungen entsprechend auf kostengünstige Weise geometrisch kleine und komplizierte Öffnungen in Bauteilwandungen herzustellen.

Im Hinblick auf die Auslegung eines Flugtriebwerkverdichters lässt sich aufgrund des neuartigen Herstellungsverfahrens eine deutliche Verringerung des für eine gegebene aerodynamische Konfiguration und Wirkung erforderlichen Konstruktions-/Fertigungsaufwandes erreichen. Am Beispiel einer hohl ausgeführten Verdichterschaufel mit Sekundärfluidkanälen scheint eine Kostenreduktion von 5% bis 25% realisierbar. Zusätzlich tritt bei Einbringung der Sekundärfluidkanäle nach dem beschriebenen Verfahren eine erhöhte Zuverlässigkeit des betroffenen Bauteils ein.

## Patentansprüche

1. Sekundärfluidkanalherstellungsverfahren für eine Strömungsmaschine, insbesondere für eine Fluidzufuhr oder Fluidabfuhr einer von einer Strömung benetzten Oberfläche der Strömungsmaschine, wobei der Sekundärfluidkanal (SFK) mittels eines elektrochemischen Erodierverfahrens erzeugt wird, **dadurch gekennzeichnet, dass** der Sekundärfluidkanal durch jeweils zumindest zwei Formelektroden hergestellt wird, welche von unterschiedlichen Seiten eines mit dem Sekundärfluidkanal (SFK) zu versehenden Bauteils in dieses eingearbeitet werden, wobei die Formelektroden jeweils zur Ausbildung eines Teilbereichs der Wandung des Sekundärfluidkanals ausgebildet sind und nacheinander oder gleichzeitig zum Einsatz gelangen.

2. Verfahren nach Anspruch 1, **dadurch gekennzeichnet, dass** die Wandung des Sekundärfluidkanals (SFK) nach dem elektrochemischen Erodieren geglättet wird.

3. Verfahren nach Anspruch 2, **dadurch gekennzeichnet, dass** die Wandung des Sekundärfluidkanals (SFK) nach dem elektrochemischen Erodieren durch Gleitschleifen mittels eines abrasive Partikel enthaltenden Fluids geglättet wird.

## Claims

1. Method for the production of a secondary fluid duct for a fluid-flow machine, in particular for fluid supply or fluid removal on a flow-wetted surface of the fluid-flow machine, where the secondary fluid duct (SFK) is produced by an electrochemical machining process, **characterized in that** the secondary fluid duct is made by at least two contour electrodes respectively, which are incorporated from different sides into a component to be provided with the secondary fluid duct (SFK), where the contour electrodes are respectively designed to form a partial area of the wall of the secondary flow duct and are used successively or simultaneously.

2. Method in accordance with Claim 1, **characterized in that** the wall of the secondary fluid duct (SFK) is smoothed after electrochemical machining.

3. Method in accordance with Claim 2, **characterized in that** the wall of the secondary fluid duct (SFK) is smoothed after electrochemical machining by vibratory finishing using a fluid containing abrasive particles.

## Revendications

1. Procédé de fabrication d'un canal de fluide secondaire pour une machine à écoulement, en particulier pour une amenée de fluide ou une évacuation de fluide sur une surface de la machine à écoulement humectée par un flux, sachant que le canal de fluide secondaire (SFK) est fabriqué par un procédé d'usinage électrochimique, **caractérisé en ce que** le canal de fluide secondaire est confectionné par respectivement au moins deux électrodes de forme qui sont incorporées de différents côtés dans un composant devant munir le canal de fluide secondaire (SFK), sachant que les électrodes de forme sont respectivement conçues pour former une zone partielle de la paroi du canal de fluide secondaire et sont mises en oeuvre successivement ou simultanément.

2. Procédé selon la revendication n° 1, **caractérisé en ce que** la paroi du canal de fluide secondaire (SFK) est polie après l'usinage électrochimique.

3. Procédé selon la revendication n° 2, **caractérisé en ce que** la paroi du canal de fluide secondaire (SFK) est polie après l'usinage électrochimique par tribofinition au moyen d'un fluide contenant des particules abrasives.
